(19) **Europäisches Patentamt**
**European Patent Office**
**Office européen des brevets**

(11) **EP 4 645 790 A1**

(12) **EUROPEAN PATENT APPLICATION**
published in accordance with Art. 153(4) EPC

(43) Date of publication:
05.11.2025 Bulletin 2025/45

(51) International Patent Classification (IPC):
*H04L 27/34* (2006.01) *H04W 72/04* (2023.01)

(21) Application number: 24783946.7

(22) Date of filing: 10.01.2024

(52) Cooperative Patent Classification (CPC):
H04L 27/00; H04L 27/34; H04W 72/04;
H04W 72/542

(86) International application number:
PCT/CN2024/071690

(87) International publication number:
WO 2024/207861 (10.10.2024 Gazette 2024/41)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.04.2023 CN 202310417298

(71) Applicant: **ZTE Corporation**
**Shenzhen, Guangdong 518057 (CN)**

(72) Inventors:
• YANG, Zhen
Shenzhen, Guangdong 518057 (CN)
• ZHANG, Wanjin
Shenzhen, Guangdong 518057 (CN)

(74) Representative: **Ziebig Hengelhaupt Intellectual
Property Attorneys
Patentanwaltskanzlei PartGmbB
Leipziger Straße 49
10117 Berlin (DE)**

(54) **COMMUNICATION METHOD, COMMUNICATION DEVICE, AND COMPUTER READABLE STORAGE MEDIUM**

(57) The present disclosure provides a communication method, a communication device, and a computer readable storage medium. The communication method comprises: acquiring capability information of a second node, the capability information comprising modulation mode information, and the modulation mode information being used for indicating a modulation mode supported by the second node; and according to the capability information of the second node, communicating with the second node by using a target modulation mode.

FIG. 4

**Description**

The present disclosure claims a priority to Chinese Patent Application No. 202310417298.5, filed on April 7, 2023, which is hereby incorporated by reference in its entirety.

TECHNICAL FIELD

The present disclosure relates to the field of communications, and in particular, to a communication method, a communication apparatus, and a computer-readable storage medium.

BACKGROUND

At present, in the modulation (such as 16-character Quadrature Amplitude Modulation (QAM) (16QAM), 64QAM and 256QAM) of the 4th Generation Mobile Communication Technology (4G) system and the 5th Generation Mobile Communication Technology (5G) system, constellation designs with uniformly distributed constellation points are adopted. These constellation design schemes with uniformly distributed constellation points feature relatively low demodulation complexity at a receiving end, and a constellation may be split into two independent Pulse Amplitude Modulation (PAM) signals for demodulation, thereby effectively reducing the cost of a receiver.

Currently, the research on the 6th Generation Mobile Communication Technology (6G) has gradually been put on the agenda. In order to meet higher performance requirements of 6G, it is necessary to seek a modulation scheme with better performance.

SUMMARY

In an aspect, there is provided a communication method in embodiments of the present disclosure, which is applied to a first node. The communication method includes: acquiring capability information of a second node, where the capability information includes modulation scheme information, and the modulation scheme information is used to indicate a modulation scheme supported by the second node; and communicating with the second node using a target modulation scheme according to the capability information of the second node.

In another aspect, there is provided a communication method in the embodiments of the present disclosure, which is applied to a second node. The communication method includes: sending capability information of a second node to a first node, where the capability information includes modulation scheme information, and the modulation scheme information is used to indicate a modulation scheme supported by the second node; and communicating with the first node using a target modulation scheme according to the capability information of the second node.

In yet another aspect, there is provided a communication apparatus in the embodiments of the present disclosure, and the communication apparatus includes: a receiving unit and a processing unit. The receiving unit is configured to acquire capability information of a second node, where the capability information includes modulation scheme information, and the modulation scheme information is used to indicate a modulation scheme supported by the second node; the processing unit is configured to perform communication with the second node using a target modulation scheme according to the capability information of the second node.

In yet another aspect, there is provided a communication apparatus in the embodiments of the present disclosure, and the communication apparatus includes: a sending unit and a processing unit. The sending unit is configured to send capability information of a second node to a first node, where the capability information includes modulation scheme information, and the modulation scheme information is used to indicate a modulation scheme supported by the second node; the processing unit is configured to perform communication with the first node using a target modulation scheme according to the capability information of the second node.

In yet another aspect, there is provided a communication apparatus in the embodiments of the present disclosure, and the communication apparatus includes: a memory and a processor. The memory is coupled to the processor, the memory is configured to store a computer program, and the processor, upon executing the computer program, implements the communication methods in above-mentioned aspects.

In yet another aspect, there is provided a computer-readable storage medium in the embodiments of the present disclosure. The computer-readable storage medium stores computer program instructions, and upon the computer program instructions are executed by a processor, the communication methods in above-mentioned aspects are implemented.

In yet another aspect, there is provided a computer program product in the embodiments of the present disclosure. The computer program product includes computer program instructions, upon the computer program instructions are executed by a processor, the communication methods in above-mentioned aspects are implemented.

BRIEF DESCRIPTION OF THE DRAWINGS

In order to illustrate technical solutions in the present disclosure more clearly, accompanying drawings need to be used in the embodiments of the present disclosure will be introduced briefly below. Obviously, the described accompanying drawings below are merely accompanying drawings of some embodiments of the present disclosure, and for a person of ordinary skill in the art may obtain other accompanying drawings according to these accompanying drawings. In addition, the described accompanying drawings below may be regarded as schematic diagrams, but are not limitations on actual sizes of products, actual processes of methods, or actual timings of signals involved in the embodiments of the present disclosure.

FIG. 1 is a schematic diagram of mapping positions of a 2-bit modulation according to some embodiments of the present disclosure.
FIG. 2 is a schematic diagram of a comparison of a uniform constellation and an un-uniform constellation according to some embodiments of the present disclosure.
FIG. 3 is a schematic diagram of an architecture of a communication system according to some embodiments of the present disclosure.
FIG. 4 is a schematic flowchart of a communication method according to some embodiments of the present disclosure.
FIG. 5 is a schematic flowchart of another communication method according to some embodiments of the present disclosure.
FIG. 6 is a structural schematic diagram of a communication apparatus according to some embodiments of the present disclosure.
FIG. 7 is a structural schematic diagram of another communication apparatus according to some embodiments of the present disclosure.
FIG. 8 is a structural schematic diagram of yet another communication apparatus according to some embodiments of the present disclosure.

DETAILED DESCRIPTION

In order to enable those skilled in the art to better understand the technical solutions in the embodiments of the present disclosure, the technical solutions in some embodiments of the present disclosure will be described clearly and completely in conjunction with the accompanying drawings. Obviously, the described embodiments are merely a part of embodiments of the present disclosure, but not all of the embodiments. All other embodiments obtained by an ordinary person of those skilled in the art based on the embodiments provided in the present disclosure shall be included in the protection scope of the present disclosure.

Unless otherwise required by the context, throughout the specification and claims, a term "comprise" or "include" and variations thereof (such as a third person singular form "comprises" or "includes" and a present participle form "comprising" or "including") is interpreted as open and inclusive, which means "include, but not limited to." In the description of the specification, terms "an embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics described may be included in any one or more embodiments or examples in any suitable manner.

Hereinafter, expressions "first" and "second," etc., are used for descriptive purposes only, and are not to be understood as indicating or implying the relative importance or implicitly indicating a number of indicated technical features. Thus, features limited with wordings "first" or "second," etc., may explicitly or implicitly include one or more of the feature(s). In the description of the embodiments of the present disclosure, the terms of "multiple", "a plurality of" or "the plurality of" means two or more than two.

The phrase "at least one of A, B, and C" has the same meaning as the phrase "at least one of A, B, or C", which both include the following combinations of A, B, and C: only A; only B; only C; a combination of A and B; a combination of A and C; a combination of B and C; or a combination of A, B, and C.

The phrase "A and/or B" includes the following three combinations: only A; only B; and a combination of A and B.

The usage of "applicable to" or "configured to" and variations thereof in the article imply an open and inclusive language, which does not exclude devices that are applicable to or configured to perform additional tasks or steps.

In addition, the usage of the phrase "based on" is meant to be open and inclusive, since a process, step, calculation or other actions that are "based on" one or more of the described conditions or values may, in practice, be based on additional conditions or exceed those described values.

In communication, in order to ensure the communication effect and overcome problems in long-distance signal transmission, it is necessary to transfer a signal spectrum to a high-frequency channel for signal transmission through modulation. A process of loading the signal to be sent into a high-frequency channel is referred to as modulation. The modulation is mainly performed by a modulation module in a wireless communication system.

The modulation module is responsible for mapping a bit sequence of 0 and 1 into a complex number in an in-phase quadrature (IQ) plane, so as to facilitate subsequent processing by other modules in the communication system. The key to modulation is where each bit combination should be mapped to in the IQ plane.

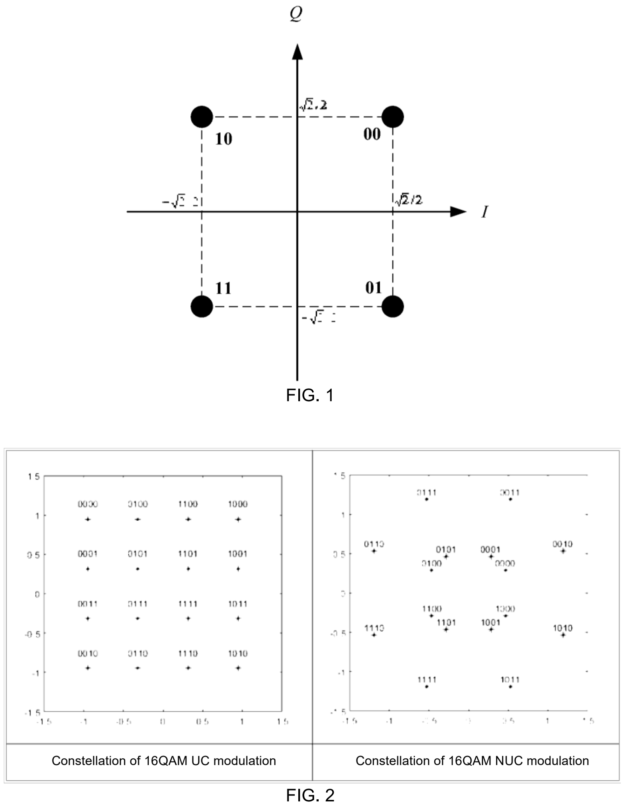

Exemplarily, taking 2-bit modulation as an example, as shown in FIG. 1, FIG. 1 is a schematic diagram of mapping positions of the 2-bit modulation. In FIG. 1, four combinations of 00, 01, 10, 11 are included, and mapping positions are $\frac{\sqrt{2}}{2} + \frac{\sqrt{2}}{2}i$, $\frac{\sqrt{2}}{2} - \frac{\sqrt{2}}{2}i$, $-\frac{\sqrt{2}}{2} + \frac{\sqrt{2}}{2}i$, and $-\frac{\sqrt{2}}{2} - \frac{\sqrt{2}}{2}i$, respectively. The 4G/5G standard developed by the 3rd Generation Partnership Project (3GPP) and the Wireless Fidelity (wifi) standard developed by the Institute of Electrical and Electronics Engineers (IEEE) both adopt QAM-based modulation. In the QAM modulation scheme, constellation points are uniformly distributed on the IQ plane in a rectangular grid.

In addition, the Digital Video Broadcasting (DVB)-S2 protocol developed by the European Telecommunications Standards Institute (ETSI) adopts the Amplitude Phase Shift Keying (APSK) modulation scheme, and constellation points are distributed on multiple circles with different radii.

In addition, in the Advanced Television Systems Committee (ATSC) of United States of America, a new un-uniform constellation is adopted, and distribution characteristics of constellation points are significantly different from the above-mentioned two.

Exemplarily, as shown in FIG. 2, FIG. 2 is a schematic diagram of a comparison of a uniform constellation and an un-uniform constellation according to some embodiments of the present disclosure. In FIG. 2, a left part is a schematic diagram of a constellation of 16QAM UC modulation, which includes 16 symbols in total, and these 16 symbols are uniformly distributed; a right part is a schematic diagram of a constellation of 16QAM NUC modulation, which also includes 16 symbols, and these 16 symbols are ununiformly distributed.

At present, in the modulation (such as 16QAM, 64QAM and 256QAM) of the 4th Generation Mobile Communication Technology (4G) system and the 5G system, constellation designs with uniformly distributed constellation points are adopted. These constellation design schemes with uniformly distributed constellation points feature relatively low demodulation complexity at a receiving end, and a constellation design may be split into two independent PAM signals for demodulation, thereby effectively reducing the cost of a receiver.

In general, a uniform constellation (UC) modulation scheme has relatively low demodulation complexity, a cost for a corresponding receiver is also relatively low; an un-uniform constellation (NUC) modulation scheme has an obvious gain for performance.

At present, research on 6G has gradually been put on the agenda. In order to meet higher performance requirements of 6G, it is necessary to seek a modulation scheme with better performance. Moreover, with the advancement of software and hardware technologies, an impact of the complexity of the demodulation algorithm on the cost of the receiver is gradually decreasing. Therefore, it is necessary to select an NUC scheme with better performance in 6G.

In response to some deficiencies in the above-mentioned technologies, a communication method and a communication apparatus are provided in the present disclosure. A base station (BS) may determine which modulation scheme to use to communicate with a terminal device based on a capability of which modulation scheme is supported of the terminal device (e.g., a user equipment (UE)). In some embodiments, the base station may also combine situations of data transmission between the base station and the terminal to implement compatibility between the UC modulation scheme and the NUC modulation scheme in the communication system. As a result, the base station and the terminal device may select a reasonable modulation scheme upon transmitting data, so as to obtain better communication performance.

The communication method provided in the present disclosure will be illustrated below in detail in combination with the accompanying drawings of the specification. It should be pointed out that, the embodiments of the present disclosure may learn from or refer to each other, for example, same or similar steps, method embodiments, system embodiments and apparatus embodiments may refer to each other, which may not be limited in the present disclosure.

The technical solutions provided in the embodiments of the present disclosure may be applied to various communication systems, for example, a communication system adopting 5G New Radio (NR), a 6G communication system, a future evolution system, or a multi-communication convergence system.

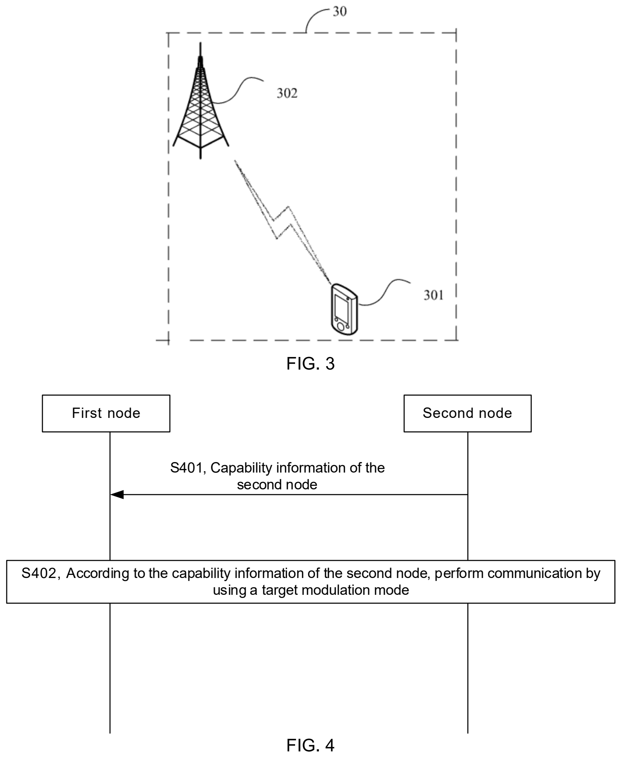

Exemplarily, as shown in FIG. 3, FIG. 3 is a schematic diagram of an architecture of a communication system 30 according to some embodiments of the present disclosure. The communication system 30 may include at least one terminal device 301 and at least one base station 302, and the at least one terminal device 301 may be in communication connection with the at least one base station 302. In FIG. 3, only one terminal device 301 and one base station 302 are shown.

The terminal device 301 is configured to send capability information of the terminal device 301 itself to the base station. The aforementioned capability information includes modulation scheme information, and the modulation scheme information is configured to indicate a modulation scheme supported by the terminal device 301. The terminal device 301 is further configured to communicate with the base station using a target modulation scheme according to the capability information of the terminal device 301 itself.

The base station 302 is configured to acquire the capability information of the terminal device 301, and communicate with the terminal device 301 using the target modulation scheme according to the capability information of the terminal device 301.

In some embodiments, the terminal device 301 may be a large-capacity device with wireless communication functions (e.g., a server integrating a large number of boards), which may be deployed on land (including indoors or outdoors, may be handheld or vehicle-mounted), may further be deployed on the water (e.g., on a ship, etc.), or may be deployed in the air (e.g., on an airplane, a balloon, and a satellite, etc.).

In some other embodiments, the base station 302 may be a device with wireless transceiving functions or a chip or chip system that may be disposed in the device. The base station 302 includes, but is not limited to, a small base station, a wireless access point, a transmission receiving point (TRP), a transmission point (TP), a macro base station, a relay base station, and any of other access nodes.

It should be noted that, FIG. 3 is merely an exemplary framework diagram, and a number of nodes and names of the various devices included in FIG. 3 are not limited. In addition to functional nodes shown in FIG. 3, the communication system 30 may further include other nodes, such as a core network device, which may not be limited in the present disclosure.

Application scenarios of the embodiments of the present disclosure are not limited. The system architecture and service scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenarios, the technical solutions provided in the embodiments of the present disclosure are also applicable to similar technical problems.

Exemplarily, as shown in FIG. 4, FIG. 4 is a schematic flowchart of a communication method according to some embodiments of the present disclosure, and the method includes the following S401 and S402.

In S401, a second node sends capability information of the second node to a first node. Accordingly, the first node acquires the capability information of the second node.

The capability information of the second node includes modulation scheme information. The modulation scheme information is used to indicate a modulation scheme supported by the second node.

In an implementation, the first node may be the base station 302 described in the above description, and the second node may be the terminal device 301 described in the above description.

Exemplarily, the modulation scheme may include a UC modulation scheme and an NUC modulation scheme. Accordingly, after the first node acquires the capability information of the second node, the first node may learn whether the second node supports the NUC modulation scheme.

In some embodiments, the capability information of the second node is carried in an RRC layer signaling. At the time, the second node sends a radio resource control (RRC) layer signaling to the first node, so that the first node acquires the capability information of the second node.

In S402, the first node communicates with the second node using a target modulation scheme.

The target modulation scheme may include a UC modulation scheme and an NUC modulation scheme.

In some embodiments, in a case where the modulation scheme includes the UC modulation scheme and the NUC modulation scheme, if the second node supports NUC modulation scheme, the first node communicates with the second node using the UC modulation scheme or NUC modulation scheme; if the second node does not support NUC modulation scheme, the first node communicates with the second node using the UC modulation scheme.

It should be noted that, in a case where the second node supports the NUC modulation scheme, configuration for the NUC of the second node may be configured by the first node or by the second node. The NUC is variable or fixed, that is, the first node or the second node may update the configuration for the NUC periodically or aperiodically.

The configuration for the NUC of the second node is described below in two cases.

(1) In a first case, the NUC of the second node is configured by the first node.

In this case, the first node may broadcast configuration information of the NUC to nodes in the cell periodically or aperiodically.

It can be understood that, when the first node is a base station, the second node is a node in a cell corresponding to the base station, such as a terminal device in the cell. At this time, the second node receives the configuration information of the NUC from the first node, and then the second node configures the NUC according to the configuration information of the NUC.

Therefore, in the first case, all second nodes supporting the NUC modulation scheme may use a same NUC. That is, the NUC is cell-specific.

In an implementation, an NUC corresponds to one or more modulation and coding scheme (MCS) levels. The NUC and the MCS levels corresponding to the NUC are included in a first MCS configuration table.

It should be noted that, naming for the first MCS configuration table is not limited in the present disclosure, and the first MCS configuration table may further be alternatively referred to as an MCS configuration table including the NUC modulation scheme.

Exemplarily, the first MCS configuration table is shown in Table 1 below. Table 1 is an MCS configuration table based on the NUC modulation scheme involved in the embodiments of the present disclosure. In Table 1, each NUC may correspond to one or more MCS levels.

Table 1 First MCS configuration table

| MCS level | Bitrate | Modulation scheme |
| --- | --- | --- |
| 0 | ... | QPSK |
| 1 | ... | QPSK |
| 2 | ... | QPSK |
| 3 | ... | 16NUC-1 |
| 4 | ... | 16NUC-1 |
| 5 | ... | 16NUC-2 |
| 6 | ... | 64NUC-1 |
| 7 | ... | 64NUC-2 |
| 8 | ... | 64NUC-2 |

Exemplarily, in contrast, as shown in the following Table 2, Table 2 is an MCS configuration table based on the UC modulation scheme involved in the embodiments of the present disclosure. In Table 2, formats of the MCS configuration table based on UC modulation adopted by the current 4G/5G standard is exemplarily shown.

Table 2 MCS configuration table based on UC modulation scheme

| MCS level | Bitrate | Modulation scheme |
| --- | --- | --- |
| 0 | ... | QPSK |
| 1 | ... | QPSK |
| 2 | ... | QPSK |
| 3 | ... | 16QAM |
| 4 | ... | 16QAM |
| 5 | ... | 16QAM |
| 6 | ... | 64QAM |
| 7 | ... | 64QAM |
| 8 | ... | 64QAM |

(2) In a second case, the NUC of the second node is configured by the second node.

In this case, the second node may send the configuration information of the NUC to the first node periodically or aperiodically.

It can be understood that, when the first node is a base station, the second node is a node in a cell corresponding to the base station, such as a terminal device in the cell. At this time, after the second node completes configuration for the NUC, the second node actively reports the configuration information of the NUC, and the first node receives the configuration information of the NUC from the second node. Then, the first node may learn the NUC used by the second node based on the configuration information of the NUC.

Alternatively, the first node sends a reporting indication to the second node; thereafter, after the second node receives the reporting indication from the first node, the second node sends the configuration information of the NUC to the first node; finally, the first node receives the configuration information of the NUC from the second node, and learns the NUC used by the second node based on the configuration information of the NUC.

Therefore, in the second case, all second nodes supporting the NUC modulation scheme may send customized NUCs to the first node, that is, an NUC is user-specific (UE-specific).

It should be noted that, the MCS configuration table including the NUC modulation scheme in the second case is the same as the aforementioned Table 1, which may not be repeated herein.

The configuration for the NUC of the second node is described above in two cases.

In some embodiments, the first node may determine the modulation scheme to be used for communication with the second node directly according to whether the second node supports the NUC modulation scheme, for example: (1) if the second node supports the NUC modulation scheme, the first node communicates with the first node using the NUC modulation scheme after the first node acquires the capability information of the second node; (2) if the second node does not support the NUC modulation scheme, the first node communicates with the first node using the UC modulation scheme after the first node acquires the capability information of the second node.

In the above description, the first node determining the modulation scheme used for communication with the second node directly according to whether the second node supports the NUC modulation scheme is illustrated.

It should be noted that, since a demodulation process of NUC is more complicated than a demodulation process of UC, the NUC modulation scheme consumes more resources and time during demodulation. Therefore, in a scenario with a high latency requirement, such as in an Ultra-Reliable Low-Latency Communications (URLLC) scenario, the usage of NUC modulation scheme with increase of processing latency for a received signal cannot fully meet requirements of the scenario. Therefore, it is necessary to limit the usage of the NUC modulation scheme.

Therefore, in some other embodiments, the first node or the second node further determines to use the UC modulation scheme or the NUC modulation scheme for communication between the first node and the second node according to modulation reference information. Exemplarily, the modulation reference information includes at least one of: a service type of transmitted data, a transmission mode of the transmitted data, a transmission requirement of the second node, or a type of a transmission channel. The first node or the second node determining to use the UC modulation scheme or the NUC modulation scheme for communication between the first node and the second node according to the modulation reference information is introduced below in four cases.

(1) The service type of the transmitted data is a service type with a latency requirement lower than a preset latency threshold.

For example, a service of the transmitted data is an ultra-low latency service, at this time, the UC modulation scheme is adopted for the communication between the first node and the second node.

(2) The transmission mode of the transmitted data is a short frame transmission.

A short frame is relative to a standard frame. For example, a length of a system standard frame is N orthogonal frequency division multiplexing (OFDM) symbols, and a length of a short frame is K OFDM symbols, where K is a positive integer less than N.

At this time, the UC modulation scheme is adopted for the communication between the first node and the second node.

(3) The transmission requirement of the second node is that a lower limit value of a peak to average power ratio (PAPR) of the second node is less than a preset PAPR threshold.

It should be understood that, the lower limit value of the PAPR of the second node is a minimum requirement of the second node for PAPR. Furthermore, when the minimum requirement of the second node for PAPR is lower than the preset PAPR threshold, the NUC modulation scheme is adopted for the communication between the first node and the second node.

It should be noted that, a size of the preset PAPR threshold may depend on an actual application, which is not limited in the embodiments of the present disclosure.

(4) The type of the transmission channel is a control channel.

That is, when the transmitted data is data of the control channel, the UC modulation scheme is adopted for the communication between the first node and the second node.

The first node or the second node determining to use the UC modulation scheme or the NUC modulation scheme for communication between the first node and the second node according to the modulation reference information is illustrated above in the four cases.

In addition, in some other embodiments, for data transmissions on certain channels, the modulation scheme used for communication between the first node and the second node may be directly determined by the first node. Taking data transmission on two channels as an example, the modulation scheme used for communication between the first node and the second node being determined by the first node is introduced below.

(1) Data is transmitted on a Physical Downlink Shared Channel (PDSCH).

For a data transmission on the PDSCH, the first node sends a downlink control information (DCI) signaling to the second node. Accordingly, the second node receives the DCI signaling from the first node.

The DCI signaling is used to indicate to the second node whether to use, for example, the UC modulation scheme or the NUC modulation scheme in PDSCH transmission.

(2) Data is transmitted on a Physical Uplink Shared Channel (PUSCH).

For a data transmission on the PUSCH, the second node sends an uplink control information (UCI) signaling to the first node. Accordingly, the first node receives the UCI signaling from the second node.

The UCI signaling is used to indicate to the first node whether to use, for example, the UC modulation scheme or the NUC modulation scheme in PUSCH transmission.

The modulation scheme used for communication between the first node and the second node being determined by the first node is illustrated above.

Based on the above technical solutions, in the embodiments of the present disclosure, the base station may implement compatibility between the UC modulation scheme and the NUC modulation scheme in the communication system according to whether the terminal device supports the NUC modulation scheme, and in combination with the situations of data transmission between the base station and the terminal. As a result, the base station and the terminal device may select a reasonable modulation scheme upon transmitting data, so as to obtain better communication performance.

In a 4G/5G communication system, a terminal device needs to periodically or aperiodically measure and report a channel quality indicator (CQI), and the measurement for a channel quality level needs to be based on a combination of a certain bitrate and a modulation scheme. Therefore, based on the communication method provided in the present disclosure, after determining the modulation scheme used for performing the communication between the first node and the second node, a first CQI configuration table is further provided, and the second node may perform CQI measurement according to the first CQI configuration table and report the CQI level to the first node.

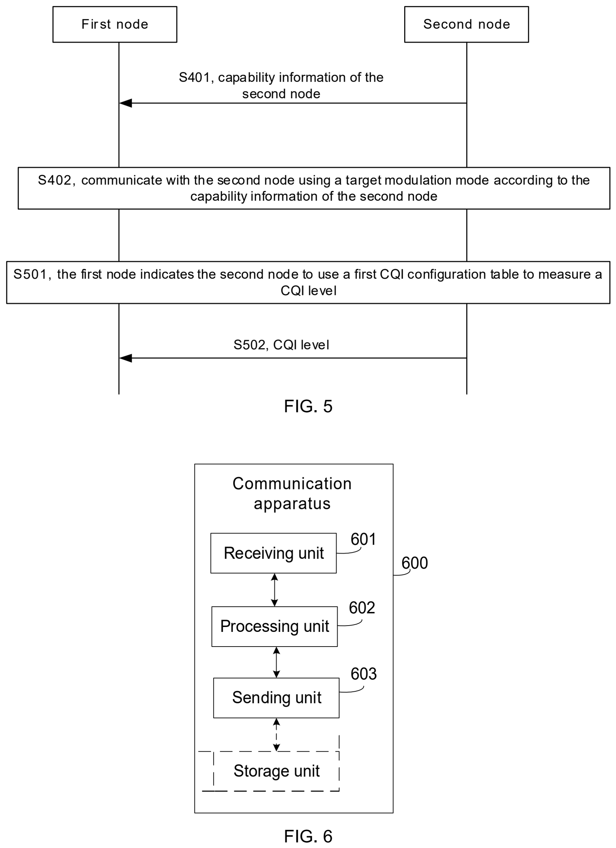

Exemplarily, in combination with FIG. 4, as shown in FIG. 5, FIG. 5 is a schematic flowchart of another communication method according to some embodiments of the present disclosure. The communication method provided in the present disclosure further includes the following S501 and S502.

In S501, the first node indicates the second node to use a first channel quality indicator (CQI) configuration table to measure a CQI level.

In some embodiments, in a case where the second node supports the NUC modulation scheme, the first CQI configuration table is shown in Table 3 below. Table 3 is a CQI configuration table including NUC provided in the embodiments of the present disclosure.

Table 3 First CQI configuration table

| CQI level | Bitrate | Modulation scheme |
|-----------|---------|-------------------|
| 0 | ... | QPSK |
| 1 | ... | QPSK |
| 2 | ... | QPSK |
| 3 | ... | 16NUC-1 |
| 4 | ... | 16NUC-1 |
| 5 | ... | 16NUC-2 |
| 6 | ... | 64NUC-1 |
| 7 | ... | 64NUC-2 |
| 8 | ... | 64NUC-2 |

In Table 3, the first CQI configuration table includes a CQI level and at least one NUC modulation scheme.

It should be noted that, naming for the first CQI configuration table is not limited in the present disclosure, and the first MCS configuration table may further be alternatively referred to as a CQI configuration table including the NUC modulation scheme.

In contrast to Table 3, as shown in Table 4 below, Table 4 is a CQI configuration table based on UC modulation provided in the embodiments of the present disclosure.

Table 4 CQI configuration table based on UC modulation scheme

| CQI level | Bitrate | Modulation scheme |
|---|---|---|
| 0 | ... | QPSK |
| 1 | ... | QPSK |
| 2 | ... | QPSK |
| 3 | ... | 16QAM |
| 4 | ... | 16QAM |
| 5 | ... | 16QAM |
| 6 | ... | 64QAM |
| 7 | ... | 64QAM |
| 8 | ... | 64QAM |

It should be noted that, if the first node does not indicate the second node to use the first CQI configuration table to measure the CQI level, or the second node does not support the NUC modulation scheme, the second node still uses the CQI configuration table based on the UC modulation scheme to measure the CQI level.

In S502, the second node sends the CQI level to the first node. Accordingly, the first node receives the CQI level.

In a case where the second node supports the NUC modulation scheme, the CQI level is obtained by the second node through measurement according to the first CQI configuration table.

In a case where the second node does not support the NUC modulation scheme, or the first node does not indicate the second node to use the first CQI configuration table to measure the CQI level, the CQI level is measured by the second node according to the CQI configuration table based on the UC modulation scheme.

Based on the above technical solutions, in the embodiments of the present disclosure, the measurement and reporting for the CQI level of the second node may be implemented by the first node indicating the second node. Furthermore, in a case where the first node does not indicate the second node or the second node does not support the NUC modulation scheme, the second node may still measure and report the CQI level according to the CQI configuration table based on the UC modulation scheme.

The generated communication apparatus may be divided into functional modules or function units according to the above-mentioned method examples in the embodiments of the present disclosure. For example, each functional module may be divided corresponding to each function, or two or more functions may be integrated into one functional module. The above-mentioned integrated module may be implemented in the form of hardware, or may be implemented in the form of the software function module or functional unit. The division for modules or units in the embodiments of the present disclosure is illustrative, and the division is only a logical function division, there may be another division manner in actual implementation.

Exemplarily, as shown in FIG. 6, FIG. 6 is a structural schematic diagram of a communication apparatus according to some embodiments of the present disclosure. The communication apparatus 600 includes: a receiving unit 601, a processing unit 602, and a sending unit 603.

The receiving unit 601 is configured to acquire capability information of a second node. The capability information includes modulation scheme information, and the modulation scheme information is used to indicate a modulation scheme supported by the second node.

The processing unit 602 is configured to communicate with the second node using a target modulation scheme according to the capability information of the second node.

In some embodiments, the processing unit 602 is further configured to communicate with the second node using the UC modulation scheme or the NUC modulation scheme in response to that the second node supports the NUC modulation scheme.

In some embodiments, the processing unit 602 is further configured to perform communication with the second node using the UC modulation scheme in response to that the second node does not support the NUC modulation scheme.

In some embodiments, the sending unit 603 is configured to broadcast configuration information of the NUC to nodes in a cell periodically or aperiodically, and the second nodes in the cell include the above-mentioned second node.

In some embodiments, the receiving unit 601 is further configured to receive the configuration information of the NUC from the second node.

In some embodiments, the receiving unit 601 is further configured to receive the configuration information of the NUC periodically from the second node.

In some embodiments, the sending unit 603 is further configured to send a reporting indication to the second node.

In some embodiments, the receiving unit 601 is further configured to receive the configuration information of the NUC reported from the second node. The reporting indication is used to indicate the second node to report the NUC.

In some embodiments, the processing unit 602 is further configured to determine to use the UC modulation scheme or the NUC modulation scheme to communicate with the second node according to modulation reference information. The modulation reference information includes at least one of: a service type of transmitted data, a transmission mode of the transmitted data, a transmission requirement of the second node, or a type of a transmission channel.

In some embodiments, the processing unit 602 is further configured to determine to use the UC modulation scheme to communicate with the second node in response to that the service type of the transmitted data is a service type with a latency requirement lower than a preset latency threshold.

In some embodiments, the processing unit 602 is further configured to determine to use the UC modulation scheme to perform communication with the second node in response to that the transmission mode of the transmitted data is short frame transmission.

In some embodiments, the processing unit 602 is further configured to determine to use NUC modulation to communicate with the second node in response to that the transmission requirement of the second node is that a lower limit value of a peak to average power ratio (PAPR) of the second node is less than a preset PAPR threshold.

In some embodiments, the processing unit 602 is further configured to determine to use the UC modulation scheme to communicate with the second node in response to that the type of the transmission channel is a control channel.

In some embodiments, the receiving unit 601 is further configured to receive a radio resource control (RRC) layer signaling from the second node, where the RRC layer signaling includes the capability information of the second node.

In some embodiments, the sending unit 603 is further configured to send a downlink control information (DCI) signaling to the second node for a physical downlink shared channel (PDSCH) transmission. The DCI signaling indicates that the UC modulation scheme or the NUC modulation scheme is used in the PDSCH transmission.

In some embodiments, the receiving unit 601 is further configured to receive uplink control information (UCI) signaling from the second node for a physical uplink shared channel (PUSCH) transmission. The UCI signaling indicates that the UC modulation scheme or the NUC modulation scheme is used in the PUSCH transmission.

In some embodiments, the receiving unit 601 is further configured to receive a channel quality indicator (CQI) level reported from the second node. In response to that the second node supports the NUC modulation scheme, the CQI level is obtained through measurement according to a first CQI configuration table, and the first CQI configuration table includes the CQI level and at least one NUC modulation scheme.

In some embodiments, the processing unit 602 is further configured to indicate the second node to measure the CQI level using the first CQI configuration table.

In some embodiments, the communication apparatus 600 may further include a storage unit (shown as a dotted box in FIG. 6), and the storage unit stores a program or instructions. Upon the receiving unit 601, the processing unit 602, and the sending unit 603 are executing the programs or instructions, the communication apparatus is enabled to perform the communication method described in the above-mentioned method embodiments.

In addition, technical effects of the communication apparatus described in FIG. 6 may refer to the technical effects of the communication method described in the above embodiments, which will not be repeated herein.

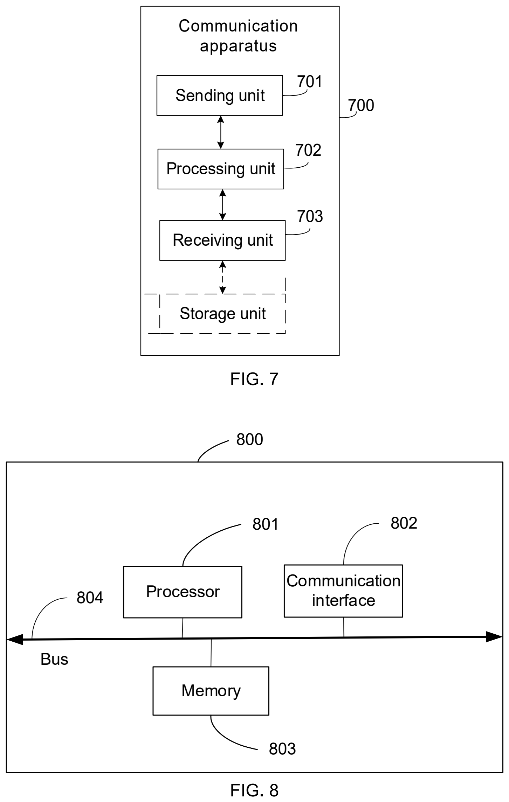

Exemplarily, as shown in FIG. 7, FIG. 7 is a structural schematic diagram of another communication apparatus according to some embodiments of the present disclosure. The communication apparatus 700 includes: a sending unit 701, a processing unit 702, and a receiving unit 703.

The sending unit 701 is configured to send capability information of a second node to a first node. The capability information includes modulation scheme information, and the modulation scheme information is used to indicate a modulation scheme supported by the second node.

The processing unit 702 is configured to communicate with the first node using a target modulation scheme according to the capability information of the second node.

In some embodiments, the processing unit 702 is further configured to communicate with the first node using the UC modulation scheme or the NUC modulation scheme in response to that the second node supports the NUC modulation scheme.

In some embodiments, the processing unit 702 is further configured to communicate with the first node using the UC modulation scheme in response to that the second node does not support the NUC modulation scheme.

In some embodiments, the receiving unit 703 is configured to receive configuration information of the NUC periodically or aperiodically from the first node.

In some embodiments, the sending unit 701 is further configured to send the configuration information of the NUC to the first node.

In some embodiments, the sending unit 701 is further configured to send configuration information of the NUC periodically to the first node.

In some embodiments, the receiving unit 703 is further configured to receive a reporting indication from the first node, and report the configuration information of the NUC to the first node. The reporting indication is used to indicate the second node to report the NUC.

In some embodiments, the processing unit 702 is further configured to determine to use the UC modulation scheme or the NUC modulation scheme to communicate with the first node according to modulation reference information. The modulation reference information includes at least one of: a service type of transmitted data, a transmission mode of the transmitted data, a transmission requirement of the second node, or a type of a transmission channel.

In some embodiments, the processing unit 702 is further configured to determine to use the UC modulation scheme to communicate with the first node in response to that the service type of the transmitted data is a service type with a latency requirement lower than a preset latency threshold.

In some embodiments, the processing unit 702 is further configured to determine to use the UC modulation scheme to communicate with the first node in response to that the transmission mode of the transmitted data is short frame transmission.

In some embodiments, the processing unit 702 is further configured to determine to use NUC modulation to communicate with the first node in response to that the transmission requirement of the second node is that a lower limit value of a PAPR of the second node is less than a preset PAPR threshold.

In some embodiments, the processing unit 702 is further configured to determine to use the UC modulation scheme to communicate with the first node in response to that the type of the transmission channel is a control channel.

In some embodiments, the sending unit 701 is further configured to send a radio resource control (RRC) layer signaling to the first node, where the RRC layer signaling includes the capability information of the second node.

In some embodiments, the receiving unit 703 is further configured to receive downlink control information (DCI) signaling from the first node for a physical downlink shared channel (PDSCH) transmission. The DCI signaling indicates that the UC modulation scheme or the NUC modulation scheme is used in the PDSCH transmission.

In some embodiments, the sending unit 701 is further configured to send an uplink control information (UCI) signaling to the first node for a physical uplink shared channel (PUSCH) transmission. The UCI signaling indicates that the UC modulation scheme or the NUC modulation scheme is used in the PUSCH transmission.

In some embodiments, the sending unit 701 is further configured to send a channel quality indicator (CQI) level to the first node. In response to that the second node supports the NUC modulation scheme, the CQI level is obtained through measurement according to a first CQI configuration table, and the first CQI configuration table includes the CQI level and at least one NUC modulation scheme.

In some embodiments, the receiving unit 703 is further configured to receive an indication from the first node, and measure the CQI level using the first CQI configuration table.

In some embodiments, the communication apparatus 700 may further include a storage unit (shown as a dotted box in FIG. 7), and the storage unit stores a program or instructions. Upon the sending unit 701, the processing unit 702, and the receiving unit 703 are executing the programs or instructions, the communication apparatus is enabled to perform the communication method described in the above-mentioned method embodiments.

In addition, technical effects of the communication apparatus described in FIG. 7 may refer to the technical effects of the communication method described in the above embodiments, which will not be repeated herein.

Exemplarily, FIG. 8 is a structural schematic diagram of another communication apparatus involved in the above-mentioned embodiments. As shown in FIG. 8, the communication apparatus includes a processor 801.

The processor 801 is configured to control and manage actions of the communication apparatus, for example, to execute the steps performed by the above-mentioned receiving unit 601, processing unit 602, sending unit 603, sending unit 701, processing unit 702 and the receiving unit 703, and/or to execute other processes of the technical solutions described herein.

The above-mentioned processor 801 may implement or perform various exemplary logical blocks, modules and circuits described in combination with the present disclosure. The processor may be a central processing unit, a general purpose processor, a digital signal processor, an application specific integrated circuit, a field-programmable gate array, or other programmable logic assembly, a transistor logic device, a hardware component, or any combination thereof, which may implement or perform various exemplary logical blocks, modules and circuits described in combination with the present disclosure. The processor may also be a combination for implementing computing functions, for example, may be a combination including one or more microprocessors, or a combination of a DSP (digital signal processor) and a microprocessor, or the like.

In some embodiments, the communication apparatus 800 may further include a communication interface 802, a memory 803, and a bus 804. The communication interface 802 is configured to support communication between the communication apparatus 800 and other network entities. The memory 803 may be configured to store program codes and data of the communication apparatus.

The memory 803 may be a memory in the communication apparatus. The memory may include volatile memory, such as a random access memory; alternatively, the memory may include non-volatile memory, such as a read-only memory, a flash memory, a hard disk or a solid state drive; alternatively, the memory may further include a combination of the above types of memory.

The bus 804 may be an extended industry standard architecture (EISA) bus, or the like. The bus 804 may be classified as an address bus, a data bus, a control bus, or the like. For ease of representation, only one bold line is used in FIG. 8 for representing the bus 804, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the apparatus may be divided into different functional modules to complete all or part of the functions described above. As for the working processes of the above-described systems, apparatuses, and units, reference may be made to the corresponding processes in the above method embodiments, which will not be repeated herein.

A computer program product including instructions is provided in the embodiments of the present disclosure, when the computer program product is run on the communication apparatus of the present disclosure, a computer of the communication apparatus is enabled to perform the communication method as described in the above-mentioned method embodiments.

A computer-readable storage medium (e.g., a non-transitory computer-readable storage medium) is provided in the embodiments of the present disclosure, the computer-readable storage medium has stored instructions thereon, and upon a computer is executing the instructions, the communication apparatus is enabled to perform the communication method as described in the above-mentioned method embodiments.

The computer-readable storage medium, for example, may be, but not limited to an electrical, magnetic, optical, electromagnetic, infrared, or semiconductor system, apparatus, or assembly, or any combination thereof. Examples (not a exhaustive list) of the computer-readable storage medium include: an electrical connection with one or more wires, a portable computer disk, and a hard drive, a random access memory (RAM), a read-only memory (ROM), an erasable programmable read only memory (EPROM), a register, a hard drive, an optical fiber, a compact disc read-only memory (CD-ROM), an optical storage assembly, a magnetic storage assembly, or computer-readable storage media combined by people mentioned above, or computer-readable storage media in any other form that are well-known in the field. An exemplary storage medium is coupled to the processor, thereby enabling the processor to read information from and write information to the storage medium. Of course, the storage medium can also be a component of the processor. The processor and storage medium may be located in an Application Specific Integrated Circuit (ASIC). In the embodiments of the present disclosure, the computer-readable storage medium may be any tangible medium containing or storing programs, and the programs may be used by an instruction execution system, apparatus, or assembly, or used in combination with the instruction execution system, apparatus, or assembly.

In the technical solutions provided in the present disclosure, a base station may select a modulation scheme used for communication between the base station and a terminal device according to whether the terminal device supports the modulation scheme. As a result, the base station and the terminal device may select a reasonable modulation scheme upon transmitting data, so as to obtain better communication performance.

The above descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

**Claims**

1. A communication method, **characterized by** being applied to a first node, the method comprising:

   acquiring capability information of a second node, wherein the capability information includes modulation scheme information, and the modulation scheme information is used to indicate a modulation scheme supported by the second node; and
   communicating with the second node using a target modulation scheme according to the capability information of the second node.

2. The method according to claim 1, wherein the modulation scheme information is used to indicate whether the second node supports an un-uniform constellation modulation scheme;
   the target modulation scheme includes a uniform constellation (UC) modulation scheme and the un-uniform constellation (NUC) modulation scheme.

**3.** The method according to claim 2, wherein

in response to that the second node supports the NUC modulation scheme, communicating with the second node using the UC modulation scheme or the NUC modulation scheme;
in response to that the second node does not support the NUC modulation scheme, communicating with the second node using the UC modulation scheme.

**4.** The method according to claim 2, wherein in response to that the second node supports the NUC modulation scheme, a configuration for an NUC of the second node comprises:

being configured by the first node; or
being configured by the second node.

**5.** The method according to claim 4, wherein
the configuration for the NUC is variable or fixed.

**6.** The method according to claim 4 or 5, wherein in response to that the NUC of the second node is configured by the first node, NUCs of a plurality of nodes supporting the NUC modulation scheme are same, wherein the plurality of nodes include the second node.

**7.** The method according to claim 6, wherein
the first node broadcasts configuration information of the NUC to nodes in a cell periodically or aperiodically, and the second nodes in the cell include the second node.

**8.** The method according to claim 4 or 5, further comprising:
receiving, by the first node, configuration information of the NUC from the second node.

**9.** The method according to claim 8, further comprising,

receiving, by the first node, the configuration information of the NUC periodically from the second node; or
sending, by the first node, a reporting indication to the second node, and receiving, by the first node, the configuration information of the NUC reported from the second node, wherein the reporting indication is used to indicate the second node to report the configuration information of the NUC.

**10.** The method according to claim 4, wherein

an NUC corresponds to one or more modulation and coding scheme (MCS) levels;
the NUC and the MCS levels corresponding to the NUC are included in a first MCS configuration table.

**11.** The method according to claim 3, wherein in response to that the second node supports the NUC modulation scheme, communicating with the second node using the target modulation scheme comprises:
determining to communicate with the second node using the UC modulation scheme or the NUC modulation scheme according to modulation reference information, wherein the modulation reference information includes at least one of:
a service type of transmitted data, a transmission mode of the transmitted data, a transmission requirement of the second node, or a type of a transmission channel.

**12.** The method according to claim 11, wherein

in response to that the service type of the transmitted data is a service type with a latency requirement lower than a preset latency threshold, determining to communicate with the second node using the UC modulation scheme; or
in response to that the transmission mode of the transmitted data is a short frame transmission, determining to communicate with the second node using the UC modulation scheme; or
in response to that the transmission requirement of the second node is that a lower limit value of a peak to average power ratio (PAPR) of the second node is less than a preset PAPR threshold, determining to communicate with the second node using the NUC modulation scheme; or
in response to that the type of the transmission channel is a control channel, determining to communicate with the second node using the UC modulation scheme.

13. The method according to claim 1, wherein acquiring the capability information of the second node comprises: receiving a radio resource control (RRC) layer signaling from the second node, wherein the RRC layer signaling comprises the capability information of the second node.

14. The method according to claim 2, wherein communicating with the second node using the target modulation scheme comprises:

for a physical downlink shared channel (PDSCH) transmission, sending, by the first node, a downlink control information (DCI) signaling to the second node, wherein the DCI signaling indicates that the UC modulation scheme or the NUC modulation scheme is used in the PDSCH transmission; for a physical uplink shared channel (PUSCH) transmission, receiving, by the first node, an uplink control information (UCI) signaling from the second node, wherein the UCI signaling indicates that the UC modulation scheme or the NUC modulation scheme is used in the PUSCH transmission.

15. The method according to claim 2, further comprising:

receiving, by the first node, a channel quality indicator (CQI) level reported from the second node; wherein in response to that the second node supports the NUC modulation scheme, the CQI level is obtained through measurement according to a first CQI configuration table, and the first CQI configuration table includes the CQI level and at least one NUC modulation scheme.

16. The method according to claim 15, further comprising: indicating, by the first node, the second node to measure the CQI level using the first CQI configuration table.

17. A communication method, **characterized by** being applied to a second node, the method comprising:

sending capability information of the second node to a first node, wherein the capability information includes modulation scheme information, and the modulation scheme information is used to indicate a modulation scheme supported by the second node; and communicating with the first node using a target modulation scheme according to the capability information of the second node.

18. The method according to claim 17, wherein the modulation scheme information is used to indicate whether the second node supports an un-uniform constellation modulation scheme; the target modulation scheme includes a uniform constellation (UC) modulation scheme and the un-uniform constellation (NUC) modulation scheme.

19. The method according to claim 18, wherein

in response to that the second node supports the NUC modulation scheme, communicating with the first node using the UC modulation scheme or the NUC modulation scheme; in response to that the second node does not support the NUC modulation scheme, communicating with the first node using the UC modulation scheme.

20. The method according to claim 18, wherein in response to that the second node supports the NUC modulation scheme, a configuration for an NUC of the second node comprises:

being configured by the first node; or being configured by the second node.

21. The method according to claim 20, wherein the configuration for the NUC is variable or fixed.

22. The method according to claim 20 or 21, wherein in response to that the NUC of the second node is configured by the first node, NUCs of a plurality of nodes supporting the NUC modulation scheme are same, wherein the plurality of nodes include the second node.

23. The method according to claim 22, wherein

receiving, by the second node, configuration information of the NUC periodically or aperiodically from the first node.

24. The method according to claim 20 or 21, further comprising:
sending, by the second node, configuration information of the NUC to the first node.

25. The method according to claim 24, further comprising:

sending, by the second node, the configuration information of the NUC periodically to the first node; or
receiving, by the second node, a reporting indication from the first node, and reporting, by the second node, the configuration information of the NUC to the first node, wherein the reporting indication is used to indicate the second node to report the NUC.

26. The method according to claim 20, wherein

an NUC corresponds to one or more modulation and coding scheme (MCS) levels;
the NUC and the MCS levels corresponding to the NUC are included in a first MCS configuration table.

27. The method according to claim 19, wherein in response to that the second node supports the NUC modulation scheme, communicating with the first node using the target modulation scheme comprises:
determining to communicate with the first node using the UC modulation scheme or the NUC modulation scheme according to modulation reference information, wherein the modulation reference information includes at least one of: a service type of transmitted data, a transmission mode of the transmitted data, a transmission requirement of the second node, or a type of a transmission channel.

28. The method according to claim 27, wherein

in response to that the service type of the transmitted data is a service type with a latency requirement lower than a preset latency threshold, determining to communicate with the first node using the UC modulation scheme; or
in response to that the transmission mode of the transmitted data is a short frame transmission, determining to communicate with the first node using the UC modulation scheme; or
in response to that the transmission requirement of the second node is that a lower limit value of a peak to average power ratio (PAPR) of the second node is less than a preset PAPR threshold, determining to communicate with the first node using the NUC modulation scheme; or
in response to that the type of the transmission channel is a control channel, determining to communicate with the first node using the UC modulation scheme.

29. The method according to claim 17, wherein sending the capability information of the second node to the first node comprises:
sending a radio resource control (RRC) layer signaling to the first node, wherein the RRC layer signaling comprises the capability information of the second node.

30. The method according to claim 18, wherein communicating with the first node using the target modulation scheme comprises:

for a physical downlink shared channel (PDSCH) transmission, receiving, by the second node, a downlink control information (DCI) signaling from the first node, wherein the DCI signaling indicates that the UC modulation scheme or the NUC modulation scheme is used in the PDSCH transmission;
for a physical uplink shared channel (PUSCH) transmission, sending, by the second node, an uplink control information (UCI) signaling to the first node, wherein the UCI signaling indicates that the UC modulation scheme or the NUC modulation scheme is used in the PUSCH transmission.

31. The method according to claim 18, further comprising:

sending, by the second node, a channel quality indicator (CQI) level to the first node;
wherein in response to that the second node supports the NUC modulation scheme, the CQI level is obtained through measurement according to a first CQI configuration table, and the first CQI configuration table includes the CQI level and at least one NUC modulation scheme.

32. The method according to claim 31, further comprising:
receiving, by the second node, an indication from the first node to measure the CQI level using the first CQI configuration table.

33. A communication apparatus, **characterized by** comprising: a processor and a memory for storing instructions executable for the processor;
wherein the processor is configured to execute the instructions, to enable the communication apparatus to perform the communication method according to any one of claims 1 to 16 or according to any one of claims 17 to 32.

34. A computer-readable storage medium, wherein the computer-readable storage medium has stored computer instructions thereon, in response to that the computer instructions are executed on a computer, the computer is enabled to perform the communication method according to any one of claims 1 to 16 or according to any one of claims 17 to 32.

FIG. 1

| Constellation of 16QAM UC modulation | Constellation of 16QAM NUC modulation |

FIG. 2

FIG. 3

S401, Capability information of the second node

S402, According to the capability information of the second node, perform communication by using a target modulation mode

FIG. 4

| First node | | Second node |
|---|---|---|

S401, capability information of the
second node

S402, communicate with the second node using a target modulation mode according to the
capability information of the second node

S501, the first node indicates the second node to use a first CQI configuration table to measure a
CQI level

S502, CQI level

FIG. 5

Communication
apparatus

Receiving unit — 601

600

Processing unit — 602

Sending unit — 603

Storage unit

FIG. 6

FIG. 7

FIG. 8

**EP 4 645 790 A1**

## INTERNATIONAL SEARCH REPORT

| | International application No. |
|---|---|
| | **PCT/CN2024/071690** |

**A.    CLASSIFICATION OF SUBJECT MATTER**

H04L27/34(2006.01)i;  H04W72/04(2023.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, DWPI, ENTXTC, WPABSC, CNKI: 调制, 格式, 方式, 非均匀分布, 星座图, 能力, 支持, 上报, 配置, 调制编码格式, 目标, NUC, UC, MCS, configuration, modulation, support, report, format, mode, constellation, capability, coding

**C.    DOCUMENTS CONSIDERED TO BE RELEVANT**

| Category* | Citation of document, with indication, where appropriate, of the relevant passages | Relevant to claim No. |
|---|---|---|
| X | US 2019173726 A1 (SONY CORP.) 06 June 2019 (2019-06-06)<br>description, paragraphs 21-54 and 81-85, and figure 5 | 1-34 |
| X | CN 110050426 A (SONY CORP.) 23 July 2019 (2019-07-23)<br>description, paragraphs 59-145 | 1-34 |
| A | US 2021385118 A1 (CANON KABUSHIKA KAISHA) 09 December 2021 (2021-12-09)<br>entire document | 1-34 |
| A | WO 2022155823 A1 (HUAWEI TECHNOLOGIES CO., LTD.) 28 July 2022 (2022-07-28)<br>entire document | 1-34 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 March 2024** | **20 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/071690**

| Patent document cited in search report | | | Publication date (day/month/year) | Patent family member(s) | | | Publication date (day/month/year) |
|---|---|---|---|---|---|---|---|
| US | 2019173726 | A1 | 06 June 2019 | WO | 2018033641 | A1 | 22 February 2018 |
| | | | | EP | 3501150 | A1 | 26 June 2019 |
| | | | | US | 2020396115 | A1 | 17 December 2020 |
| CN | 110050426 | A | 23 July 2019 | US | 2019305996 | A1 | 03 October 2019 |
| | | | | EP | 3552332 | A1 | 16 October 2019 |
| | | | | WO | 2018108886 | A1 | 21 June 2018 |
| | | | | CN | 114584272 | A | 03 June 2022 |
| US | 2021385118 | A1 | 09 December 2021 | US | 2024048433 | A1 | 08 February 2024 |
| | | | | JP | 2023053119 | A | 12 April 2023 |
| | | | | JP | 2020141309 | A | 03 September 2020 |
| | | | | WO | 2020175053 | A1 | 03 September 2020 |
| WO | 2022155823 | A1 | 28 July 2022 | CN | 116724507 | A | 08 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310417298